# EUROPEAN PATENT APPLICATION

(11) **EP 0 913 678 A2**
(43) Date of publication of application: **06.05.1999**
(21) Application number: 98119482.2
(22) Date of filing: 15.10.1998
(51) Int. Cl.: G01L 9/06

(54) **Semiconductor pressure sensor**

(30) Priority: 30.10.1997 JP 298169/97
(71) Applicant: Hitachi, Ltd., Chiyoda-ku, Tokyo 101-8010 (JP); Hitachi Car Engineering Co., Ltd., Hitachinaka-shi, Ibaraki 312-0062 (JP)
(72) Inventor: Miki, Masayuki, Hitachinaka-shi, Ibaraki 312-0024 (JP); Suzuki, Seiko, Hitachioota-shi, Ibaraki 313-0016 (JP); Tsuchita, Kenji, Hitachioota-shi, Ibaraki 313-0003 (JP); Miyazaki, Atsushi, Mito-shi, Ibaraki 310-0913 (JP); Kubota, Masanori, Hitachinaka-shi, Ibaraki 311-1201 (JP); Yamaguchi, Shinichi, Hitachinaka-shi, Ibaraki 312-0032 (JP); Sasada, Yoshiyuki, Hitachinaka-shi, Ibaraki 312-0063 (JP)
(74) Representative: Beetz & Partner Patentanwälte

(57) **Abstract**

In order to decrease a resistance component of lead portion (41 - 44) of a pressure sensor, surfaces of the lead portions other than gauge portions (31 - 34), and pad portions (51 - 54) of the pressure sensor are coated directly with a metallic thin film such as aluminum, or at least an acceptor impurity such as boron, potassium, phosphorus, antimony or arsenic, is doped into the lead portions (41 - 44) and the pad portions (51 - 54).

## Description

### BACKGROUND OF THE INVENTION

The present invention relates to a semiconductor pressure sensor (SOI type pressure sensor) using in controlling engines of vehicles, in particular, to a semiconductor pressure sensor of high performance preferable in decreasing a resistance at a junction between gauges for measuring pressure precisely of gases and liquids such as oil, fuel, hydraulic oil, and improving detecting sensitivities of the gauge portions.

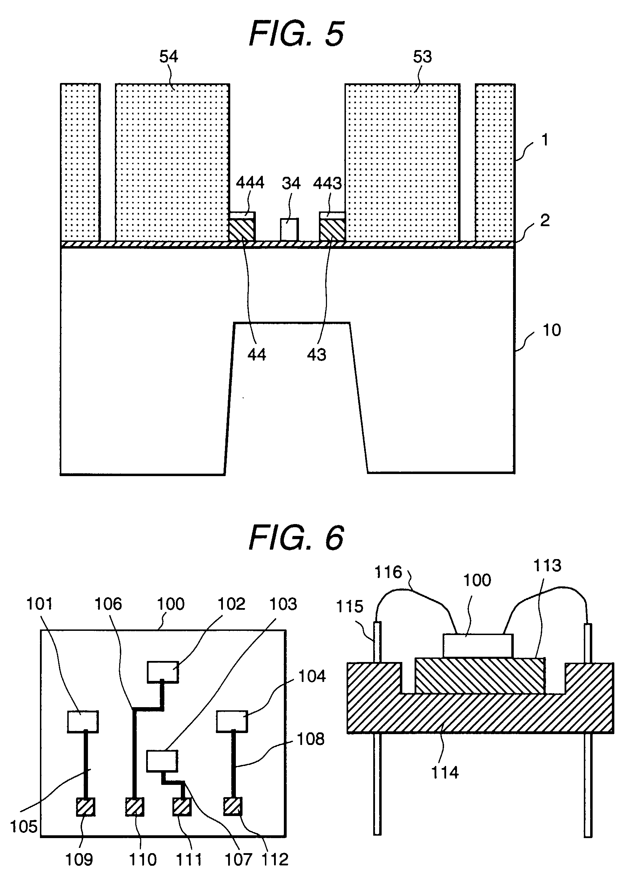

In accordance with the prior art relating to the present invention, the junctions between plural gauges are composed using a metallic thin film, a wire, and the like, so as to avoid being influenced by the resistance of the junction. A schematic structure of the prior art is indicated in FIG. 6 (a) and FIG. 6 (b). In FIG. 6 (a), the numeral mark 100 designates a semiconductor silicone chip having gauges portions, 101, 102, 103, and 104 are gauge resistance elements made by diffusion and the like on the silicone chip 100, 105, 106, 107, and 108 are lead portions connected to each of the gauge resistance elements, 109, 110, 111, and 112 are pad portions connected to the lead portions, each of the lead portions are connected to the gauge resistance elements. In FIG. 6 (b), 113 is a chip base fixing the silicone chip 100, 114 is a stem for outputting electrical signals to external circuits, and 115 are lead pins insulated from the stem.

Each of the gauge resistance elements manufactured separately each other on a same chip as explained above is connected to a corresponding pad portion, respectively, by a lead made of metallic thin film such as gold, aluminum, or the like. An interval between each of the pad portions and a corresponding lead pin is connected by a wire-bonding method with a wire made of gold, aluminum, or the like. Accordingly, because the resistance components between the gauges are only based on the metallic thin film made of gold, aluminum, or the like, and the gold wire, or the aluminum wire, the resistance components become extremely small.

### SUMMARY OF THE INVENTION

One of the objects of the present invention is to provide a semiconductor pressure sensor, wherein the resistance components at the lead portion are made extremely small, because the detection performance of the sensor itself is lowered by the resistance component of the lead portion superimposed to the gauge resistance component which varies corresponding to an external force.

In order to achieve the above object by decreasing the resistance components of the lead portions, which are manufactured in a body on a same silicone member, to extremely small, coating directly surfaces of the lead portion other than the gauge portion, and of the pad portion with a metallic thin film such as aluminum, and doping acceptor impurities such as boron, potassium, phosphorus, antimony, arsenic, and the like into the lead portions and pad portions are effective.

### BRIEF DESCRIPTION OF THE DRAWINGS

FIG. 1 is a schematic plan view of a silicone chip of the semiconductor pressure sensor relating to the present invention,
FIG. 2 is a schematic illustration indicating a cross sectional structure of the silicone chip of the semiconductor pressure sensor relating to the present invention,
FIG. 3 is an illustration indicating an electrical equivalent circuit of the gauge portion of the semiconductor pressure sensor relating to the present invention,
FIG. 4 is a schematic plan view of a silicone chip indicating an embodiment of the present invention,
FIG. 5 is a schematic illustration indicating a cross sectional structure of an embodiment of the present invention, and
FIG. 6 is a set of drawings indicating a conventional method for leading out lead wires.

### DESCRIPTION OF THE PREFERRED EMBODIMENTS

Hereinafter, embodiments of the present invention are explained referring to drawings.

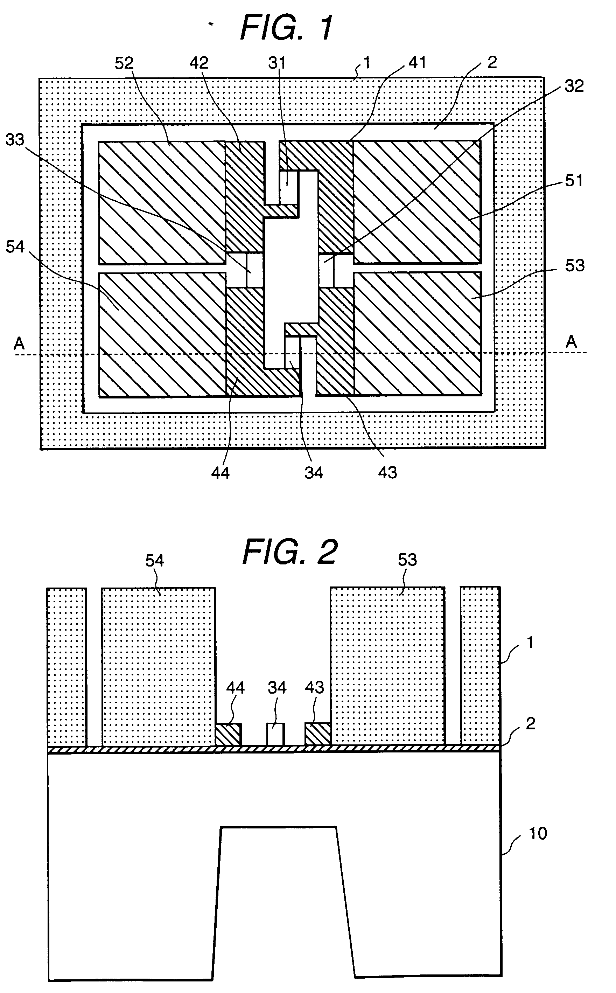

FIG. 1 is a schematic plan view of a silicone chip formed on a second silicone member of the semiconductor pressure sensor related to the present invention. In FIG. 1, the numeral mark 1 indicates a silicone chip; 2 is an insulating film, for instance a heating oxidized film, provided at an intermediate place between a first silicone member and the second silicone member; 31, 32, 33, and 34 are gauge resistance elements on the second silicone member, which are made by a method of silicone etching such as dry etching or wet etching; 41, 42, 43, and 44 are lead portions, respective of which is connected to the corresponding gauge resistance elements 31, 32, 33, and 34; and 51, 52, 53, and 54 are pad portions, respective of which is connected to the corresponding lead portions 41, 42, 43, and 44. All the components indicated by the same numeral mark in the following description have the same function.

FIG. 2 is a schematic illustration indicating a cross sectional structure of the silicone chip of the semiconductor pressure sensor relating to the present invention, taken along the line A - A line in FIG. 1. The mark 10 indicates a first silicone member, having a diaphragm, combined with the silicone chip 1 made of the second silicone member via the heating oxidized film 2 by a heat treatment process. The gauge resistance element 34 and the lead portions 43, 44 are manufactured simultaneously by a silicone etching process with the same silicone member so as to have a same silicone thickness.

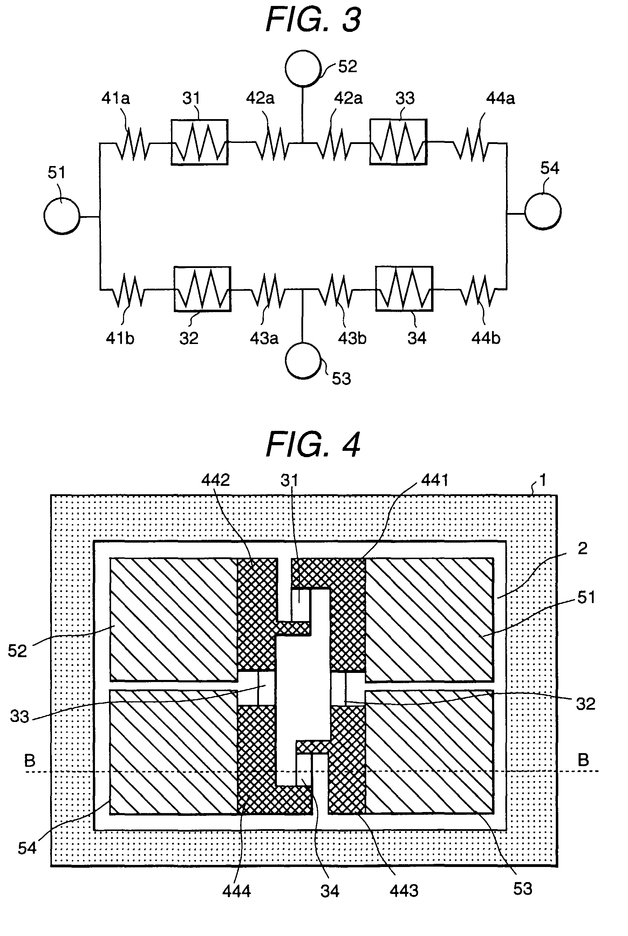

FIG. 3 indicates an electrical equivalent circuit of the semiconductor pressure sensor relating to the present invention. In FIG. 3, the marks 41a and 41b are resistance components of the lead portion 41, and connected to a terminal of respective of the gauge resistance elements 31 and 32. Similarly, the marks 42a and 42b are resistance components of the lead portion 42, and connected to a terminal of respective of the gauge resistance elements 31 and 33. The marks 43a and 43b are resistance components of the lead portion 43, and connected to a terminal of respective of the gauge resistance elements 32 and 34.

The marks 44a and 44b are resistance components of the lead portion 44, and connected to a terminal of respective of the gauge resistance elements 33 and 34.

As explained above, the resistance component of the lead portion, which is manufactured in the same body, is superimposed to respective of the gauge resistance elements. When the resistance component of the lead portion is a value which can not he regarded as negligible in comparison with the resistance component of the gauge resistance element, a preciseness of the detection is lowered.

The second silicone member 1 is made of conductive material, and has a resistance component. Accordingly, when a voltage is applied between the pad portions 51 and 54, and an output is detected at intermediate points of the pad portions 52 and 53 with a bridge circuit composed of the gauge resistance elements 31 ∼ 34, the resistance components at the lead portions 41 ∼ 44 other than the gauge resistance are erroneous components, and a sensitivity for change of the gauge resistance elements, of which resistance varies depending on influence of offset voltage, and further on an external pressure, is decreased. Therefore, the resistance of the lead portions 41 ∼ 44 are desirably zero, and it is necessary to set a ratio of the resistance at the lead portion to the resistance of the gauge resistance element in the range of 1:100 ∼ 1:1000 in view of improving the performance such as detection preciseness and decreasing the offset voltage, in order to avoid the influence of the resistance at the lead portions as possible.

FIG. 4 is a schematic plan view of a silicone chip indicating an embodiment of the present invention.

In FIG. 4, the marks 441, 442, 443, and 444 are metallic thin films provided onto the surface of the lead portions 41, 42, 43, and 44 shown in FIG. 1, previously. In order to decrease the resistance components of these lead portions, a metallic film having a small resistance, for instance, aluminum and the like is formed on the surface of the lead portion by mask spattering or deposition, or, after forming a film onto all the surface of the lead portion by spattering or deposition, removing the metallic film at portions other than the lead portions by photolithography. In accordance with forming the above metallic film, the resistance component of the lead portion is apparently decreased, and the object of the present invention can be achieved.

The decrease of the resistance component can be achieved by another method, wherein acceptor impurities are doped onto the surface of the lead portions 41, 42, 43, and 44 of the silicone member. In this case, the optimum concentration of the impurities revealed by the inventor's experiment is in the range of 10¹⁸ ∼ 10²⁰. Boron, potassium, and the like can he used as the acceptor when the silicone substrate is P type, and phosphorus, arsenic, antimony, and the like can be used when the silicone substrate is N type.

FIG. 5 indicates a cross sectional structure of an embodiment of the present invention taken along the B - B line in FIG. 4. Only the resistance component of the gauge, which varies depending on external forces, can be detected precisely with a high sensitivity, by making the structure of the sensor as shown in FIG. 5, wherein metallic thin films are arranged on the surface of the lead portions 43 and 44.

In accordance with the present invention, the resistance components of the lead portions among gauges, which are manufactured simultaneously in a process for manufacturing the plural gauges, can be decreased, and only the resistance components of the gauges, which vary depending on external forces, can be detected precisely with a high sensitivity. Because output errors (offset voltages) on account of fluctuation in production generated at the gauge manufacturing process can be accommodated, advantages such as increasing the production yield, simplifying and time saving in the output adjusting operation of external circuit, and cost down can be realized.

## Claims

1. A semiconductor pressure sensor comprising:
a first silicone member (10) comprising a diaphragm,
a second silicone member (1) comprising;
a gauge portion (31 - 34), of which resistance component is varied corresponding to deformation of said diaphragm, and
a lead portion (41 - 44) connected to said gauge portion (31 - 34), an insulating layer (2) arranged at intermediate portion between said first silicone member (10) and said second silicone member (1), wherein:
a resistance of said lead portion (41 - 44) is smaller than a resistance of said gauge portion (31 - 34).

2. A semiconductor pressure sensor as claimed in claim 1, wherein
surface of the silicone member of said lead portion (41 - 44) is coated directly with a metallic thin film.

3. A semiconductor pressure sensor as claimed in claim 1, wherein
a ratio of the resistance of the lead portion (41 - 44) to the resistance of the gauge portion (31 - 34) is in the range of 1:100 to 1:1000.

4. A semiconductor pressure sensor as claimed in claim 1, wherein
at least an acceptor impurity is doped into said lead portion.

5. A semiconductor pressure sensor as claimed in claim 4, wherein
said acceptor impurity to be doped into the lead portion (41 - 44) is at least any one of boron and potassium, when the silicone member is P type.

6. A semiconductor pressure sensor as claimed in claim 4, wherein
said acceptor impurity to be doped into the lead portion is at least any one of phosphorus, arsenic, and antimony, when the silicone member is N type.

7. A semiconductor pressure sensor as claimed in any one of claims 4, 5, and 6, wherein
a concentration of said acceptor impurity in the lead portion arranged in the second silicone member is in the range of 10¹⁸ - 10²⁰.
